## Europäisches Patentamt
## European Patent Office
## Office européen des brevets

(19)

(11) Publication number: **0 015 885**
**A1**

# EUROPEAN PATENT APPLICATION

(21) Application number: **80850021.9**

(22) Date of filing: **28.02.80**

(51) Int. Cl.³: **B 29 C 27/02, B 65 D 65/40**

(30) Priority: **03.03.79 DE 2908397**

(43) Date of publication of application: **17.09.80**
**Bulletin 80/19**

(84) Designated Contracting States: **AT BE CH FR GB IT LU NL SE**

(71) Applicant: **AB Akerlund & Rausing, Fack, S-221 01 Lund (SE)**

(72) Inventor: **Gross, Helmut, Auf der Schlicht 109, D-6203 Hochheim/Main (DE)**
Inventor: **Hauck, Hermann, Danziger Allee 8C, D-6203 Hochheim/Main (DE)**

(74) Representative: **Graudums, Valdis et al, AB Akerlund & Rausing Patent Department Fack, S-221 01 Lund (SE)**

(54) **Method and apparatus for closing a container with a cover.**

(57) A coating on an external rim (29) of a container (30) to be closed by heat sealing a coated cover (19) onto the rim (29) is heat-activated in a preheating stage (15) and then the cover (19) is pressed onto the rim (29) whilst applying heat to the cover (19) and/or rim (29) so that the coatings on the rim and cover are sealed together. The preheating (15) preferably is with hot air whilst the rim (29) is supported on a support frame (31) which preferably is also heated. The invention has particular application to cardboard containers of food requiring cooking by the consumer and permits the use of Surlyn cover coatings (47) with polyester rim coatings (48) for such containers (30). In the Surlyn/polyester combination, it is preferred that the cover (19) and rim (29) are only pressed together at a plurality of discrete locations so that polyester is squeezed into intermediate areas allowing Surlyn to penetrate the cardboard layer (46) of the rim (29) at the pressing locations.

- 1 -

## METHOD AND APPARATUS FOR CLOSING
## A CONTAINER WITH A COVER

The invention relates to a method of closing with a cover a tray or other container having an external rim by heating sealing together coatings on the opposed faces of the cover and the rim. It has particular, but not exclusive, application to sealing a carboard container, particularly a plastics material-coated packaging tray for finished foods in the home and in industry in which a flat blank is folded, assembled and filled, followed by feeding to a sealing station and closing by sealing on a cover. The invention also relates to an apparatus for performing the method, said apparatus comprising an opposed pair of jaws which are relatively movable to press the cover and the container rim together, and heating means for heating at least one of said jaws so that the cover and rim are simultaneously pressed and heated.

For illustration purposes and to provide a better understanding of the subject matter, the invention will be described with reference to a baking tray, into which is introduced a pulverulent food, particularly for pastries, and which is then sealed with a cover. Such a tray is known, for example, from DOS 28 29 708. The tray described in DOS 28 29 708 is made from cardboard supporting material coated with polyethylene, polypropylene, or the like, and having the outside thereof printed in colour and the inside coated with an aluminium foil. The known baking trays are supplied to the consumer filled and sealed with a cover and the consumer only has to tear off the cover and, optionally after adding water, place the opened container into an ordinary oven. The baking or cooking process is then carried out in the tray, which following baking or cooking is opened out so that the finished cake or the like can easily be transferred to a dish or the like.

A difficulty with the known baking trays is that, as a result of the baking or cooking process, the materials used must be capable of withstanding a relatively high temperature for a relatively long time, without impairing the food, e.g. the pastries. For example, finished mixtures for pastry may require heating at 175°C for 40 to 45 minutes. Therefore, the materials from which the tray is made must be able to withstand such temperatures for the required time. Other foods, which are to be cooked at approximately 150°C in, for example, a convectomat are packed in a tray having paper or board as the support material and coated with plastics material and, in part, metal foil. Furthermore, after filling with the food, the tray must be tightly sealed prior to the final treatment and must be easily opened by the consumer.

Considerable difficulties are particularly encountered when such baking trays are required for microwave cooking. Aluminium foil coatings prevent the use of microwave heating and as a result attempts have been made to replace the aluminium foil by various plastics materials or lacquers coating the cardboard. A temperature limit is placed on the baking or cooking process by the plastics materials used. For example, in the case of polyethylene the temperature limit is between 100 and 105°C, for polypropylene it is between 145 and 150°C and for polyester (PPTP or PETP) it is between 220 and 225°C. Unfortunately, polyesters are difficultly sealable (including weldable) plastics materials. It is necessary for the sealed tray to be secure and at least drip-proof and hence an intense welding process is required. If two plastics-coated parts are to be welded together, one welding parameter is the solidification range of plastics, i.e. the temperature range between the fluid and solid state of the plastics material. In the case of polyesters this range is so small that the welding temperature is critical.

If sufficient heat passes through the cardboard support material to the plastics or lacquer coating for welding purposes, there is often a danger of burning, i.e. brown areas form which impair the appearance of the finished container. Excessive heating can also damage the printing ink.

It is known to seal together plastics-coated cardboard support material webs by using constant heat jaws, whereby a so-called upper heater is pressed against a back-pressure plate and thereby heat passes through the support material to the coating which is to be plasticized or liquefied. In other sealing processes a lower heater is used, whilst processes are also known which use both upper and lower heaters. Heating by means of hot air and subsequent pressing by means of cold jaws has proved satisfactory with polyethylene and polypropylene. However, the above-mentioned difficulties always occur.

The principal object of the present invention therefore is to provide a method and an apparatus which will enable an open tray or other container having an external rim and containing food to be baked or cooked to be sealed with a cover to produce a tight and strong welded joint which can be easily

opened and which gives off no substances which are harmful to the food during the baking or cooking process.

In this invention the problem of a difficultly sealable combination of container and cover coatings is overcome by preheating the container rim coating and then pressing the cover onto the rim whilst supplying additional heat. So-called difficultly sealable plastics have under certain conditions proved to provide an advantageous solution to the aforementioned problem because preheating and then sealing the cover and the rim by pressure and heat ensures a tight seal. Excessive heating of the coatings by pressure jaws, which leads to unattractive brown burnt areas or damage to the printing, can be avoided if the rim coating is activated by preheating. By correct temperature pre-setting in the preheating station, the heat supply to the sealing station can be kept adequately low, so that the container can be tightly and at least drip-sealed, whilst allowing the cover to be torn off by the consumer without exerting a great deal of force, and the foods are not impaired during heating.

According to a first aspect of the present invention, there is provided a method of closing with a cover a container having an external rim by heat-

sealing together coatings on the opposed faces of the cover and the rim, wherein the coating on the rim is activated by preheating and, whilst the rim coating is still activated, subsequently pressing the cover onto the rim whilst applying heat to the cover and/or rim.

According to a second aspect of the present invention, there is provided apparatus for performing the method of the invention, said apparatus comprising an opposed pair of jaws which are relatively movable to press the cover onto the container rim and heating means for heating at least one of said jaws so that the cover and rim are simultaneously pressed and heated, wherein preheating means are provided to heat-activate the coating on the container rim before applying the cover.

Usually the support material of the container will be a fibrous material, especially cardboard and the coatings on the cover and the rim will be plastics materials. As mentioned previously, the invention has particular application to plastics coatings which are difficultly sealable together, especially when at least the rim coating is a polyester such as PPTP or PETP. It is particularly preferred if the rim coating is a polyester and the cover coating is Surlyn.

It is particularly advantageous to pre-heat the container rim by blowing on hot gas, especially air. It has been found that, with appropriate metering of the air and precisely defined spacing between the hot air heating means and the container rim, the correct temperature can be very precisely regulated, whereby plasticizing or liquefying of the rim coating can take place at exactly the desired points without mechanical damage to the coating.

It is also particularly advantageous if, especially in the case of a polyester rim coating and a Surlyn cover coating, the cover and rim are pressed together only at a plurality of discrete locations of the rim. Usually, these locations will be uniformly spaced apart. In a preferred embodiment of the invention, the support material of the container is a fibrous material and when the cover and rim are pressed together at said locations, rim coating material is forced from the pressing locations to intermediate areas and cover coating material penetrates into the fibrous support material of the rim at the pressing locations.

The method of the invention surprisingly makes it possible to use polyester-polyester or similar difficultly sealable plastics materials as the coating combination of the container rim on the one hand and the cover on the other. Whilst such combinations permit the necessary conditions to be fulfilled, tests have shown that particularly good results are obtained with a polyester-Surlyn combination.

It is known from DOS 28 29 708 that Surlyn has a good affinity for other coating materials and said specification discloses it combined with aluminium foil. There is also excellent adhesion when sealing Surlyn to polyester and the sealing process can be satisfactorily performed by the method of the invention, although the plastics combination of polyester (as the rim coating) on the one hand and Surlyn (as the cover coating) on the other is difficultly sealable.

The present invention also solves for the first time the problem of using Surlyn in containers for finished foods, i.e. for packing foodstuffs which undergo their final preparation by heating by the consumer. Surlyn has a melting point of only 90°C and hence it is necessary to ensure that the packed product after opening does not come into contact with Surlyn during heating. The problem can be overcome in the manner indicated hereinbefore by applying pressure to the heat-activated polyester coating (e.g. PFTP) at a plurality of discrete locations to force it out of areas in which pressure is applied into intermediate areas. As a result, the cardboard of the cover as well as the Surlyn coating are deformed. Surlyn has a good bonding strength and, on applying further pressure, it penetrates the cardboard areas of the rim freed from polyester and adheres thereto. Thus, in advantageous manner, a substantially tight and in particular drip-proof, heat-resistant and easily openable container is obtained whose appearance has not been impaired by the sealing process. The condition that the finished product may not come into contact with Surlyn during cooking is surprisingly also fulfilled. When the consumer opens the sealed cardboard container by tearing off the Surlyn-coated cover, he also tears away cardboard fibres from those areas of the rim which had been penetrated by the Surlyn. The Surlyn, which is not resistant to heat at cooking temperatures (e.g. 175°C during baking), adheres to the torn-off cover. The degree of anchoring between the Surlyn and the cardboard areas freed from the polyester by the zonally applied pressure is advantageously adjusted in such a way that the container is not destroyed on tearing off the cover. Whilst the melting point of the Surlyn is 90°C, that of the polyester remaining on the rim of the container and exposed to the baking or other cooking process is about 225°C. Thus, the Surlyn has no detrimental influence on the food during cooking, because it has already been removed and thrown away with the torn-off cover and will not be exposed to the cooking temperature.

The apparatus for performing the method of the invention is characterised in that preheating means are provided for heat-activating the container rim before the cover is applied to the rim. Usually the preheating means are disposed at a preheating station, the jaws are disposed at a sealing station and conveying means are provided to convey the preheated container from the preheating station to the sealing station. Preferably, the preheating means comprises hot gas heating means directing hot gas onto the rim coating and especially also a heated lower frame which supports the container rim whilst the hot gas is directed onto the rim coating. By maintaining the heat of the lower frame sufficient support heat is supplied from below to the rim of the open container to prevent the preheated plastics coating partially hardening due to heat loss. Advantageously, the hot gas heating means provides an endless curtain of hot gas directed onto the rim.

According to another advantageous embodiment of the invention, the hot gas heating means has a gas distributing unit with an adjustable, for example screwed-down, outer casing to vary the distance between the casing and the lower frame and said outer casing is provided with members  for holding the rim down onto the lower frame.   In this manner the hot gas can be supplied in a precisely defined direction, width and quantity, which parameters can be adjusted by moving the outer casing.   Further, the holding-down members press the rim against the lower frame at spaeed locations so that the precise adjustment discharge gap for the hot gas is not rendered ineffective by the rim not lying flat on the frame.

It is also advantageous if both jaws at the sealing station are provided by respective frames and especially that at least one of said frames has a plurality of discrete projections on its surface facing the other frame.   As a result of these measures, it is possible to seal the rim and cover together at a plurality of spaced locations as required by the preferred embodiment of the method of the invention previously described.   The projections suitably are frustum-like and preferably are uniformly spaced apart, the spacing optionally being such that the intermediate areas between the projections are approximately the same as the pressing areas provided by the projections.   Thus, a network of raised and depressed areas is provided, the depressed areas being those where pressure is not directly applied and the raised areas being those where pressure is directly applied by the frames.

Further advantages, features and possible uses of the present invention will be appreciated from the following description with reference to the drawings of preferred but non-limiting embodiments of the invention. In the drawings:-

Figure 1 is a diagrammatic perspective view of a complete installation for producing a cardboard container, including filling, sealing and conveying away;

Figure 2 is a cross-sectional view through a hot air preheating device of the installation shown diagrammatically in Figure 1;

Figure 3 is a broken-away section along the line III-III of Figure 2;

Figure 4 is a side view, partly in section, of the preheater of Figure 2 when preheating a container rim;

Figure 5 is a side view, partly in cross-section, of an upper heated frame shown in Figure 6;

Figure 6 is an underneath plan view, partly in section, of the upper heated frame of Figure 5;

Figures 7 to 10 are broken-away diagrammatic sectional views on an enlarged scale of process stages during the sealing of a cover onto the container rim shown in Figure 4; and

Figure 11 is a broken-away diagrammatic sectional view of the cover shown in Figures 7 to 10, which cover is partly torn off and still partly fixed to the container rim.

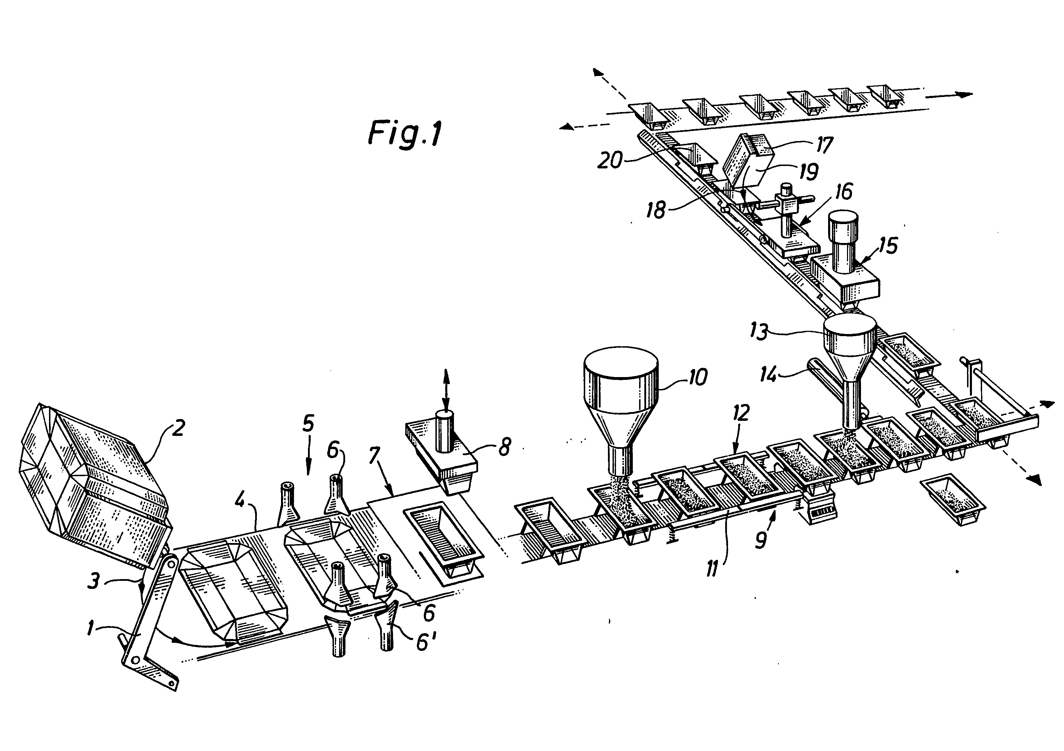

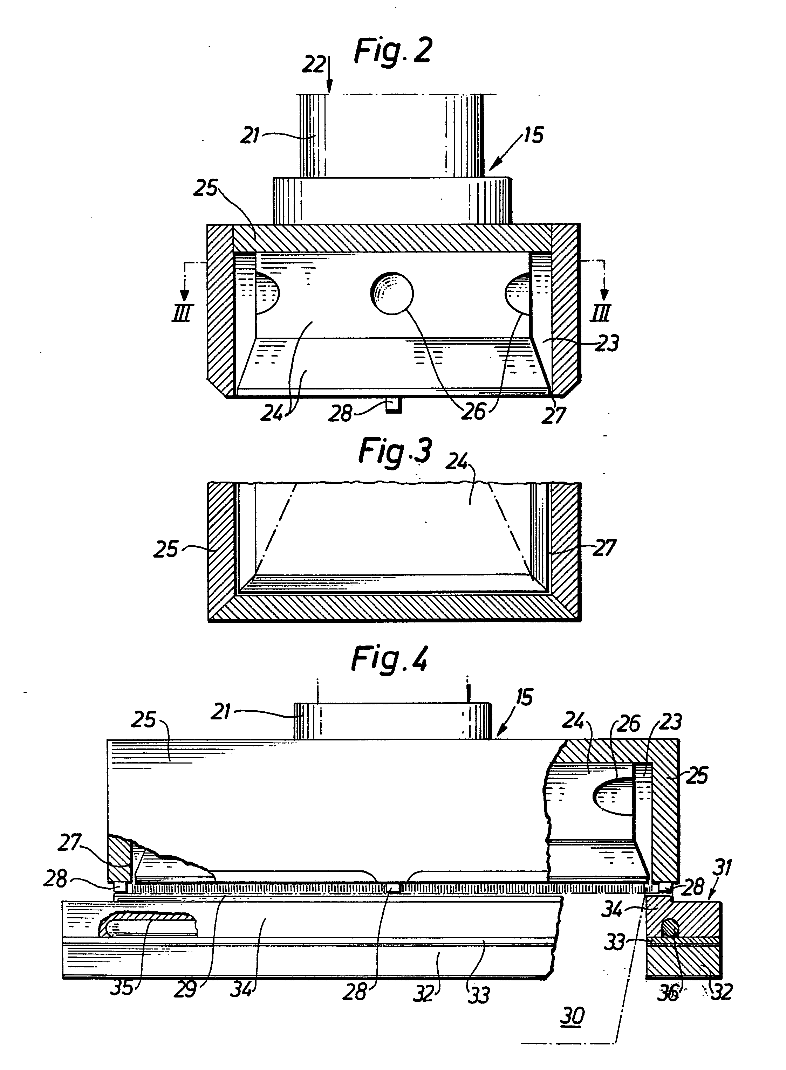

A tray coated with a polyester is assembled, filled and sealed with a cover coated with Surlyn, by the installation shown diagrammatically in Figure 1. A removal device 1 removes the lower blank from a stack of blanks 2 and moves it in the direction of the curved arrow 3 onto a conveyor 4. The conveyor 4 conveys the blank 2 to a heat-activating apparatus 5 where hot air nozzles 6 selectively heat-activate those areas of the blank surface required to be heat welded together. The heated blank is then shaped and/or folded and assembled in a forming station 7 with the aid of a punch 8 which moves into a die in the direction of the indicated double arrow. In a following filling station 9, preliminary filling takes place by means of a first hopper 10, followed by vibration by means of a vibrator 11, weighing in area 12, topping-up by means of a topping-up hopper 13 and optional removal of unfilled trays by means of an empty tray discharge mechanism 14. The filled tray is now moved 90° to the left (as viewed in Figure 1) under a hot air heater 15, explained in greater detail with reference to Figures 2 to 4. The lower cover of a stack of covers 19 is removed in the direction of curved arrow 18 and sealed onto the tray at a sealing station 16 by pressing-down and heating with upper and lower jaws. The sealed tray 20 is then removed for further processing.

The hot air heater 15 is shown in greater detail in Figures 2 to 5. Air flowing in the direction of arrow 22 (see Figure 2) is heated in a partly shown air heater 21 and passes into a distributing unit 24 and then via openings 26 into a pressure chamber 23. The pressure chamber 23 narrows at its lower end towards an outer casing 25, which in special cases is adjustably screwed down. Due to the lower narrowing of the pressure chamber 23 an endless discharge gap 27 for the hot air is provided around the bottom of the unit 24 (see Figure 3).

The hot air flow below the distributing unit 24 is indicated by dashes in Figure 4. Figure 4 also shows tray holding-down members 28 depending from the lower edge of the outer casing 25. The hot air leaving the endless discharge gap 27 passes between the holding-down members 28 onto a rim 29 of the tray 30. The rim 29 is supported from below by a lower frame 31, which comprises a base plate 32, heat-insulating layer 33 and a heating resistor 36 arranged in a recess 35 of a support frame 34.

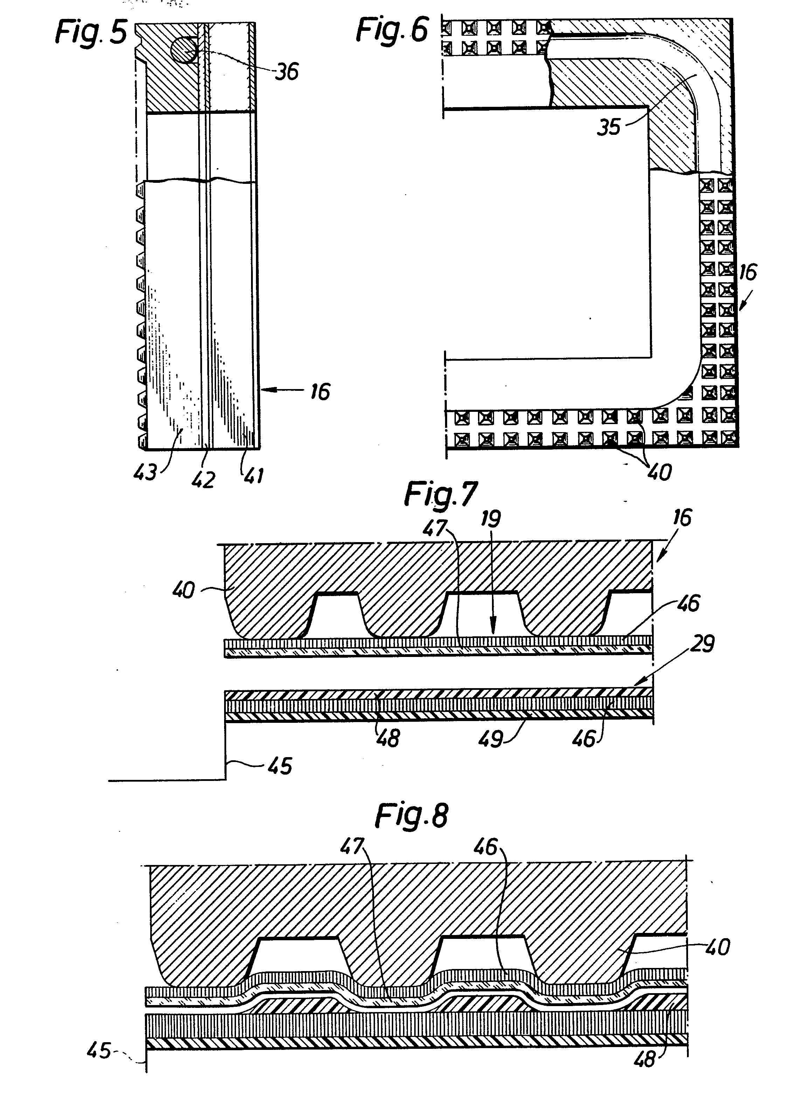

The sealing station 16 (see Figure 1) has an upper heated frame which is shown in detail in Figures 5 and 6. The upper heated frame is constructed in similar manner to the lower frame 31 in that it has a base plate 41 separated by an insulating layer 42 from, and serving as a mounting support for, a welding plate 43 which is provided with a heating resistor 36 located in a recess 35. Frustum-shaped projections (shown on an enlarged scale in Figures 7 to 10) depend from the plate 43.

Figure 7 shows the first stage of a process in which the rim 29 of tray 30 is supported on an unheated lower frame 45. The rim 29 comprises a layer 46 of cardboard support material (indicated by vertical hatching) coated on its upper and lower faces with polyester coating 48, 49 respectively. A cover 19 is positioned below the frustum-shaped projections 40 of the upper frame 16. The cover 19 comprises a sheet 46 of cardboard which is laminated or coated on its lower face with a Surlyn layer 47. As shown in Figure 7, a free space is left between the cover 19 and the rim 29 of the tray 30.

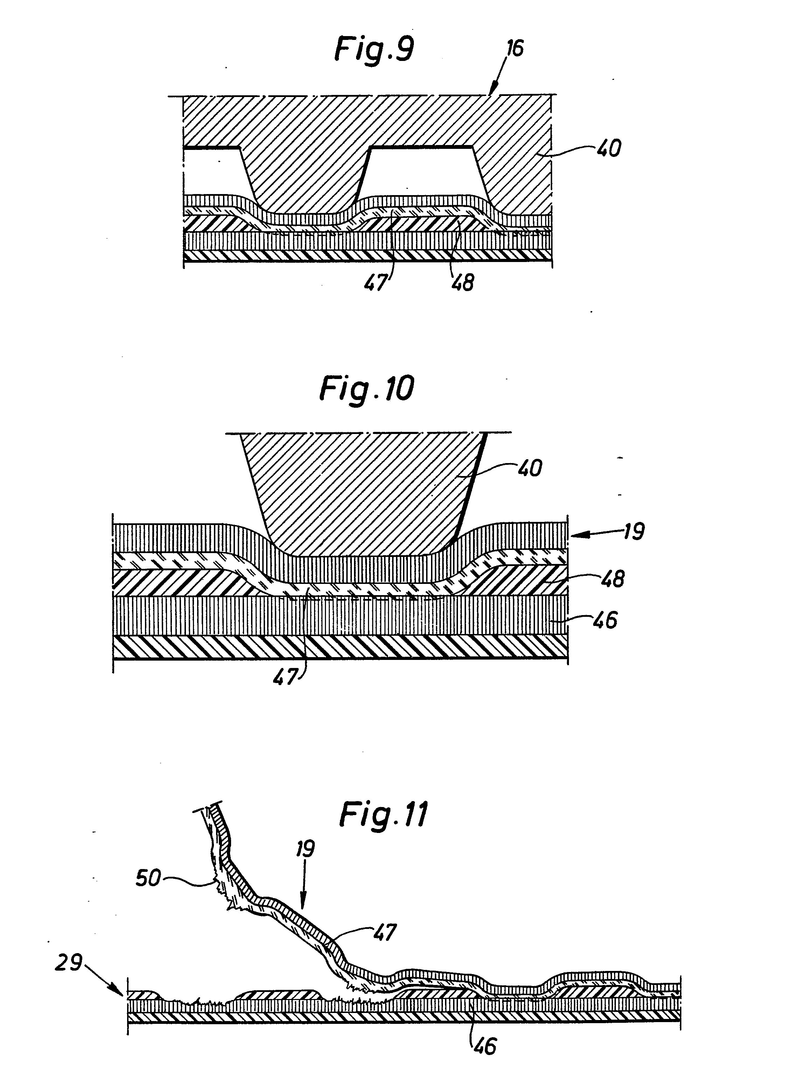

The upper frame 16 is moved towards the lower support frame 45 into the position shown in Figure 8.
As a result, the cardboard sheet 46 of the cover 19
together with the Surlyn layer 47 is deformed by the
pressure exerted by the projections 40. Further,
the polyester layer 48 which has previously been
heated and plasticized by the hot air heater 15 flows
out of the areas below projections 40 into the intermediate areas between the projections thereby reducing the quantity of polyester in the areas below
projections 40 to an almost negligible level. The
upper frame 16 is moved further downwards into the
position shown in Figures 9 and 10 causing the Surlyn
layer 47 in the areas below projections 40 to partially penetrate the cardboard material of layer 46
of the rim 29 of the tray 30 and thereby forms a firm
bond therewith. In this manner, the cover 19 is
sealed in the desired manner onto the tray 30.

Before inserting the sealed tray into an
oven, the consumer has to tear cover 19 from the rim
29 (see Figure 11). When this is done fibres 50 of
the cardboard layer 46 of the rim 29 are torn from
the surface of the said layer in the areas which
were previously below the projections 40. Thus,
the entire Surlyn layer 47 remains on the cover 19
and is completely separated from the tray 30, so
that during baking the food is not detrimentally
influenced.

## CLAIMS

1.    A method of closing with a cover a container having an external rim by heat sealing together coatings on the opposed faces of the cover and the rim, wherein the coating on the rim is activated by preheating and, whilst the rim coating is still activated, subsequently pressing the cover onto the rim whilst applying heat to the cover and/or rim.

2.    A method as claimed in Claim 1 wherein the support material of the container is a fibrous material.

3.    A method as claimed in Claim 2 wherein the support material is cardboard.

4.    A method as claimed in any one of the preceding Claims wherein the coatings are plastics materials.

5.    A method as claimed in Claim 4 wherein the plastics materials are difficultly heat sealable together.

6.    A method as claimed in Claim 5 wherein at least the rim coating is a polyester.

7.    A method as claimed in Claim 6 wherein the polyester is PPTP or PETP (polypropylenterefthalat or polyethylenterefthalat).

8.    A method as claimed in Claim 5 or Claim 6 wherein the rim is coated with a polyester and the cover is coated with Surlyn.

0015885

- 18 -

9.      A method as claimed in any one of the preceding Claims wherein the preheating is performed by blowing hot gas onto the rim coating.

10.     A method as claimed in any one of the preceding Claims wherein before closing with the cover the container is filled with food requiring subsequent baking or cooking.

11.     A method as claimed in any one of the preceding Claims wherein the cover and rim are pressed together only at a plurality of discrete locations of the rim.

12.     A method as claimed in Claim 11 wherein said locations are uniformly spaced apart over the entire surface of the rim.

13.     A method as claimed in Claim 11 or Claim 12 wherein the support material of the container is a fibrous material and, when the cover and rim are pressed together, rim coating material is forced from said locations to areas between said locations and cover coating material penetrates into the fibrous support material of the rim at said locations.

14.     Apparatus for performing a method as claimed in any one of the preceding Claims comprising an opposed pair of jaws which are relatively movable to press the cover onto the container rim and heating means for heating at least one of said jaws so that the cover and rim are simultaneously pressed and heated, wherein preheating means are provided to heat-activate the coating on the container rim before applying the cover.

15. Apparatus as claimed in Claim 14 wherein the preheating means are disposed at a preheating station, the jaws are disposed at a sealing station and conveying means are provided to convey the preheated container from the preheating station to the sealing station.

16. Apparatus as claimed in Claim 14 or Claim 15 wherein the preheating means comprises hot gas heating means directing hot gas onto the container rim coating.

17. Apparatus as claimed in Claim 16 wherein the preheating means also comprises a heated lower frame which supports the container rim whilst the hot gas is directed onto the rim coating.

18. Apparatus as claimed in Claim 17 wherein the hot gas heating means provides an endless curtain of hot gas directed onto the rim.

19. Apparatus as claimed in Claim 17 or Claim 18 wherein the hot gas heating means has a gas distributing unit with an adjustable outer casing to vary the distance between the casing and the lower frame and said outer casing is provided with members for holding the rim down onto the lower frame.

20.     Apparatus as claimed in any one of Claims 14 to 19 wherein both jaws are provided as respective frames.

21.     Apparatus as claimed in Claim 20 wherein at least one of said jaw frames has a plurality of discrete projections on its surface facing the other jaw frame.

22.     A method for sealing a cardboard container, particularly a plastics-coated box for finished foods in the home and industry, in which the box is folded, assembled and filled, supplied to a sealing station and closed by sealing-on a cover, wherein the plastics combination of the box and the cover is difficultly sealable, the plastics-coated top of the upper edge of the box is preheated and then the cover is pressed onto the upper edge of the box, accompanied by an additional heat supply by means of upper and/or lower heating.

23.     A method according to Claim 22, wherein the upper edge of the box is preheated by blowing on hot air.

24.     A method according to either of Claims 22 and 23, wherein the box is coated with polyester and the lid or cover has Surlyn on the inside and wherein the additional heat and press-on pressure is supplied in point-by-point manner to the upper edge of the box.

25. A method according to either of Claims 22 and 23, wherein polyester-polyester or similar plastics are used as the difficultly sealable plastics combination of box and cover.

26. An apparatus for performing the methods according to any one of the Claims 22 to 25 with a conveyor for moving the box and cover and with a lower heater and/or a upper heater in the form of welding plates, which can be moved against one another with pressure, whilst pressing the edge areas of the cover onto the upper edge of the box, wherein a hot air apparatus for preheating the top of the upper edge of the box is provided in front of the upper and/or lower heater in the conveying direction.

27. An apparatus according to Claim 26, wherein the hot air apparatus is positioned above a heated lower frame on which the upper edge of the box is supported, whilst maintaining heat.

28. An apparatus according to Claim 27, wherein the hot air apparatus has a distributing unit with an adjustable screwed-on outer casing on whose side facing the lower frame are provided holding-down devices.

29. An apparatus according to Claim 26, wherein an upper heater and a lower heater with in each case

- 22 -

a frame-like welding plate are provided and at least
one welding plate has projections on its surface
facing the other welding plate.

0015885

Fig.1

**Fig. 2**

**Fig. 3**

**Fig. 4**

**Fig.5**

36

16

43  42  41

**Fig.6**

35

16

40

**Fig.7**

47  19  16

40

46

29

48  49  46

45

**Fig.8**

47  46

40

45  48

## Fig.9

16

40

47    48

## Fig.10

40

19

48

46

47

## Fig.11

19

50

47

29

46

European Patent Office

**EUROPEAN SEARCH REPORT**

EP 80 85 0021

| Category | Citation of document with indication, where appropriate, of relevant passages | Relevant to claim |
|---|---|---|
| | **DOCUMENTS CONSIDERED TO BE RELEVANT** | |
| | GB - B - 990 529 (NATIONAL DISTILLERS AND CHEMICAL CORP.) <br> * page 3, lines 58 to 111; fig. 9, 10 * <br> & DE - A - 1 479 498 <br> FR - A - 1 324 771 <br> -- | 11,12 |
| A | DE - A1 - 2 408 287 (ALUMINIUMWERK TSCHEULIN GMBH) <br> * claims 1, 2; fig. * <br> -- | |
| A | DE - A - 2 207 904 (FARBWERKE HOECHST) <br> * page 2, lines 22 to 28; page 3, line 29 to page 4, line 2 * <br> & FR - A - 2 172 729 <br> -- | |
| A | DE - U - 1 992 957 (TEDECO-VERPACKUNG) <br> * page 5, lines 5 to 15 * <br> -- | |
| A | AT - B - 311 246 (SCHEUCH KG) <br> * page 2, line 58 to page 3, line 11; page 3, lines 31 to 38 * <br> -- | |
| D | DE A1 - 2 819 708 (AB AAKERLUND & RAUSING) <br> * complete document * <br> ---- | |

**CLASSIFICATION OF THE APPLICATION (Int. Cl.³)**

B 29 C 27/02
B 65 D 65/40

**TECHNICAL FIELDS SEARCHED (Int.Cl.³)**

B 29 C 27/02
B 65 B 7/28
B 65 B 51/10
B 65 D 5/24
B 65 D 65/38
B 65 D 65/40
B 65 D 65/42

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 09-06-1980 | BRUCK |

EPO Form 1503.1 06.78